# EUROPEAN PATENT SPECIFICATION

(11) **EP 1 332 676 B1**
(45) Date of publication and mention of the grant of the patent: **21.07.2004**
(21) Application number: 01982497.8
(22) Date of filing: 08.11.2001
(51) Int. Cl.: A01N 63/00, A01N 43/16

(54) **BIOLOGICAL PESTICIDE BASED ON CHITOSAN AND ENTOMOPATHOGENIC NEMATODES**
BIOLOGISCHES SCHÄDLINGSBEKÄMPFUNGS MITTEL AUF DER BASIS VON CHITOSAN UND NEMATODEN
PESTICIDE BIOLOGIQUE A BASE DE CHITOSANE ET DE NEMATODES ENTOMOPATHOGENES

(30) Priority: 10.11.2000 ES 200002708
(43) Date of publication of application: 06.08.2003
(73) Proprietor: Idebio, S.L., 37008 Salamanca (ES)
(72) Inventor: MARTINEZ PENA, Alejandro, E-37008 Salamanca (ES)
(74) Representative: Elzaburu, Alberto de
(86) International application number: PCT/ES2001/000429
(87) International publication number: WO 2002/037966

(56) References cited:
- EP-A2- 0 220 667
- WO-A1-96/23871
- WO-A1-99/22598
- US-A- 5 374 627

## Description

### TECHNICAL FIELD OF THE INVENTION

The present invention deals with insect pest control using biological agents, entomopathogenic nematodes, and an active compound: chitosan, improving and increasing crop resistance to pests, diseases and survival in adverse environmental conditions, obtaining better growth and yield of said crops.

### STATE OF THE ART

Crop protection plays a critical and integral role in modern farm production. Increasingly demanding yields and forecasts of insufficient production to meet future demands have paved the way to the optimisation of farming practises environment-friendly all over the world. The attempt to satisfy the growing demand has increased the risk of damage by pests and the need to control them.

At present, crop production in these farming systems is almost exclusively based on the use of chemical phytosanitary products. The non-selective character of pesticides negatively affects the balance between agricultural pests. Therefore, the need still exists of providing a better and more effective crop protection method. It is calculated that 37% of world farm production is lost due to pests and diseases. Due to ecological reasons and for the increasing commercial importance of ecological farming, a growing demand exists for natural, non-toxic, biodegradable products, as well as for biological control.

Plants do not have an immunological system as such, but in their evolution have acquired an active defence system involving the activation of defensive genes of the host plants. Said genes may produce physical and biochemical changes. For example, they may change the properties of the plant's cell wall. Examples of this type of change include the accumulation of glycoproteins with a high content of hydroxyproline^{1,2}, lignification and suberisation³, callous deposition^{4,5,6} and accumulation of phenolic compounds^{7,8}. Moreover, the activation of these defensive systems may result in the biosynthesis and accumulation of phytoalexins, anti-microbial compounds, toxic for bacteria and fungi^{9,10,11,12} and the release of oligosaccharides of an animal origin, inducers of the response to pathogen attacks, a new class of proteins called "proteins related to pathogenesis" or PR proteins^{13,14,15,16}.

Among the induced anti-microbial compounds against fungal pathogens, are the lithic enzymes, chitosanase and beta-1,3-glucanase. These enzymes digest the chitosan and the glucosamine, main components of the wall of various fungal pathogens^{15,16}. Likewise, they are involved in the resistance of plants to insect attacks, since the chitosan is mainly present in the exoskeleton thereof. The fragments resulting from this enzymatic lysis may induce biosynthesis by the stress response metabolite host. Therefore, these enzymes seem to be involved in the host signalling, besides in the degradation of the pathogen^{17,18,19}.

The entomopathogenic nematodes are a group of non-segmented invertebrates, with an Excretion Apparatus, Nervous System, Reproduction Apparatus and Muscular System.

The order of greatest interest due to their effectiveness for insect control is the Rhabditida, where many of the members are insect parasites. Among them, the most important are the Steinernematidae and Heterorhabditidae families²⁰.

Nematodes have a simple life cycle including: the egg, four juvenile stages (separated from each other by moults) and adults. That is: egg, L1, L2, L3 (juvenile infective), L4 and adults (male and female). The juvenile stage (L3) is called juvenile infective or "dauer" larva, which has the particularity of being resistant to adverse environmental conditions thanks to a cuticle they develop. The juvenile infectives transport symbiotic bacteria in their intestine, hence serving as "bacteria carriers" between one host and the other²¹.

The entomopathogenic nematodes of the Steinernematidae and Heterorhabditidae families are applied for the biological control of a wide spectrum of pest insects, due to the fact that juvenile infectives "JI" penetrate in the host through different natural holes thereof. Inside the host, they release a symbiotic bacteria (Xenorhabdus or Photorhabdus, depending on the nematode species in question) causing the death of the target insect by septicaemia²⁰.

The bacteria favouring their development during insect infection, produce a series of secondary antibiotics and metabolites inhibiting the growth of other bacteria and fungi. Likewise, they also produce chitosanases which aid the assimilation of the chitosan by the plants²². Once the pest has been eliminated, the biostimulating effects are remarkable due to chitosan mobilisation.

However, the current application of biological insecticides has as a main drawback, the slow or negligible recovery of the damaged farm crops. That is, the effects produced on the tissues by the plague, once the latter has been combated, by the biological pesticide, makes the recovery of the ill farm crops, complicated or very slow and a source of entry of diseases like Fusarium, Verticilium, Phytopthora. The present invention intends to solve this problem by the selection of a compound regenerating the damaged tissues and which, in turn, is harmless or even beneficial, such that the biological pesticide may be stored and applied together with it, without losing its pesticide effect.

### Definitions

Entomopathogenic Nematodes: nematodes which are parasites of one or more insect species.

Juvenile Infective (JI): stage of the biological cycle (L3) of the nematode invading and infecting a determined insect. It consists of a mouth, anus with the aperture closed, oesophagus, collapsed intestine and pointed tail. Its length varies approximately from 400 to 800 µm and its width, from 20 to 40 µm, depending on the nematode species in question. It has an outer cover called sheath, protecting it from adverse environmental conditions and as a reserve to remain in the field until the capture of a host.

Contamination: plants, land or farming materials infected by plagues of insects or their larvae.

Polarimetric Degree: this is the way of measuring the commercial sugar production extracted by tons from sugar beet.

Efficacy: this is measured as the percentage (%) of dead insects or larvae compared with the reference.

Steinernematidae and Heterorhabditidae The members of these two families are obligate parasites and insect pathogens. They are colourless and segmented nematodes having the following taxonomic classification:

| | |
|---|---|
| Phylum | Nematode |
| Class | Secernentea |
| Order | Rhabditida |
| Suborder | Rhabditina |
| Superfamily | Rhabditoidea |
| Families | Steinernematidae and Heterorhabditidae |

Within the Steinernematidae family, is the genus Steinernema (Travassos) (=Neoaplectana, Steiner), in which the following species of commercial interest are found: Steinernema carpocapsae (Weiser), Steinernema feltiae (Filipjev), Steinernema scapterisci (Nguyen and Smart), Steinernema glaseri (Steiner) and Steinernema riobravis (Cabanillas, Poinar and Raulston). On the other hand, in the Heterorhabditidae family, the genus Heterorhabditis is found, whose species of commercial interest are: Heterorhabditis bacteriophora (Poinar) and Heterorhabditis megidis (Poinar, Jackson and Klein).

Steinernema and Heterorhabditis are symbiotically related to bacteria of the genus Xenorhabdus (Thomas and Poinar) and Photorhabdus (Boemare et al), respectively. This nematode/bacteria complex may be cultured in vivo and in vitro on a large scale and the infective stages (L3 or JI) may be stored for long periods, maintaining their infective capacity and afterwards, they may be applied by conventional agronomic methods used with chemical insecticides²⁰.

Steinernema and Heterorhabditis have different forms, depending on the stages and sex presented throughout their biological cycle²³.

These nematodes have a wide range of hosts, most of them at some moment of their life cycle remain on the ground. Likewise, insects which never live on the ground in their life cycle are vulnerable.

Most vulnerable insects belong to the orders:
Lepidoptera:
   - Chilo spp.,
   - Galleria mellonella,
   - Spodoptera littoralis,
   - Pieris rapae,
   - Melolontha melolontha,
   - Agrotis segetum,
   - Thaumetaopoea pytiocampa,
   - Zeuzera pyrina
Coleoptera:
   - Vesperus xatarti,
   - Cosmopolites sordidus,
   - Capnodis tenebionis,
   - Cleonus mendicus,
   - Hylotrepas bajulus

Other vulnerable orders:
Diptera :
   - Ceratitis capitata,
   - Bemisia spp,
   - Trialleudores vaporarium,
   - Liriomyza trifolii
Acari (like, for example):
   - Boophilus pinniperda,
   - Dermacentor vaviabilis,
   - Amblyoma cajennense
Heteroptera :
   - Dysdercus peruvianus
Homoptera :
   - Dysmicoccus vaccini
Isoptera :
   - Reticulotermes spp,
   - Kalotermes flavicollis,
   - Glyptotermes dilatatus
Gastropoda :
   - Deroceras reticulatum,
Orthoptera :
   - Locusta migratoria
   - Melanoplus sanguinipes,
   - Scapteriscus vicinus
Ixodida :
   - Ripicephalus sanguineus,
Blatodea :
   - Periplaneta brunne
Hymenoptera :
   - Tirathaba rufivena,
   - Elasmopalpus lignosellus,
   - Hoplocampa testudinea

Other species to which the nematodes are parasitic:

| Species | |
|---|---|
| Acalyma vittatum | Chilo spp |
| Acrolepia assectela | Choristeneura occidentalis |
| Adoryphorus couloni | Cirphis compta |
| Agrotis ipailon | Conopia myopasformis |
| Agrotis palustris | Conorhynchus mendicus |
| Agrotis segetum | Cosmopolites sordidus |
| Amyelois transitella | Costrelytra zealandica |
| Anabrus simplex | Curalio caryae |
| Anomala spp. | Cyclocephala borealis |
| Anoplophora malasiaca | Cydia pomonella |
| Apriona cinerea | Cydocephala hirta |
| Blastophagus pinniperda | Cylus formicarius |
| Boophilus annulatus | Dacus cucurbitae |
| Bradysia coprophila | Delia antiqua |
| Capnodis tenebrionis | Delia floralis |
| Carpocapsa pomonella | Delia platura |
| Carpoaina nipponensis | Delia radicum |
| Castnia dedalus | Dendroctonus frontalia |
| Cephalcia abietis | Dermacentor vaviabilis |
| Cephalcia lariciphila | Deroceras reticulatum |
| Ceratitis capitata | Diabrotica balteata |
| Ceuthorrynchus napi | Diabrotica barberi |
| Diabrotica virginifera | Limonius califormicus |
| Diaprepes abbreviatus | Liriomyza trifolii |
| Dysdercus peruvianus | Listronotus orejonensis |
| Dysmicoccus vaccini | Locusta migratoria. |
| Earias insulana | Lycoriella auripila |
| Eldana spp. | Maladera motrica |
| Galeria melonella | Manduca sexta |
| German cockroach | Megaselia halterata |
| Glyptotermes dilatatus | Melanoplus sanguinipes |
| Grapholita funebrana | Migdolus spp. |
| Grapholita molesta | Monochanus alternatus |
| Graphonathus peregrinus | Musca domestica |
| Helicoverpa zea | Nemocestes incomptus |
| Heliothis armigera | Oamona hirta |
| Heliothis zea | Operhoptera brumata |
| Hylenia brasicae | Opogona sacchari |
| Hylobius abietia | Ostrinia nubilalis |
| Hylotrepes bajulus | |
| Hylobius transversovittatus | Otiorhynchus ovatus |
| Hypantria cunea | Otiorhynchus sulcatus |
| Ixodes scapularis | Pachnaeus litus |
| Ixodid ticks | Panisetia marginata |
| Laspeyreaia pomonella | Pantomorus spp. |
| Leptinotarsa decenlineata | Pectinophora gossyprella |
| Periplaneta brunnea | Strobilomyia appalachensis |
| Phlyctinus callosus | Thaumetopoea pytiocampa |
| Phyllotreta cruciferae | Tirathaba rufivena |
| Phylophaga spp. | Tomicus pinniperda |
| Pieris rapae | Tryporysa incertulas |
| Platiptilia carduidactyla | Vietacea polistiformis |
| Plutella xylostella | Wiseana copularis |
| Polyphylla spp. | Zeiraphera canadensis |
| Pseudaletia separata | Zeusera pyrina |
| Pseudexentera mali | Zophodis grossulatariata |
| Psylliodes chrysocephala | Phyllonictis citrella |
| Pyrrbalta luteola | Xylotrechus arvicola |
| Rhipicephalus sanguineus | Trialeudores vaporarium |
| Rhizotropus majalis | Melolontha melolontha |
| Rhyacionia buolinana | Tipula paludosa |
| Rhyacionia Erustrana | Blatella germanica |
| Rusidrina depravata | Vespula spp |
| Scapteriscus vicinus | Lixus spp |
| Sitoma lineatus | Reticulitermes lucifugus |
| Sitona discoideus | Parapediasia teterrella |
| Sphenophorus parvulus | Fumibotys fumalis |
| Spodoptera exigua | Bemisia spp |
| Spodoptera litura | Longitarsus waterhorsei |

### Literature

1) Esquerre - Tugaye, M. T., Lafitte, C., Mazau, D., Toppan, A., and Tonse, a., Plant physiol.64, 320-326 (1979).
2) Showalter, A. M., Bell, J.N., Craver, C.L., Bailery, J.A., Varner, J.E. And Lamb, C.I., Proc.Nat1. Acad. Sci. USA 82, 6551 - 6555 (1985).
3) Vance, C.P., Kirt, T.K., and Sherwood, R.T., Espelie, K.E., Francheschi, V.R., and Kolattukdy, P.E.; Plant Physiol. 81, 487 - 492 (1986)
4) Ride, J.P.; In Biochemical Plant Pathology (Ed. J.A. Callow);
5) John Wiley and Sons, New York, pp. 215-236 (1983)
6) Bonhoff, A., Reith, B., Golecki, J., and Grisebach, H.; planta 172, 101-105 (1987)
7) Matta, A., Gentile, H., and Giai, L.; Phytopathol., 59, 512-513 (1969)
8) Hunter, R. L., Physiol. Plant Pathol. 4, 151-159 (1974)
9) Bell, A.. A.; Ann. Rev. Plant Physiol. 32, 21-81 (1981)
10) Darvill, A. G. And Albersheim, P.; Ann. Rev. Plant Physiol. 35, 243-275 (1984)
11) Hahlbrock, K. And Grisebach, H.; Ann. Rev. Plant Physiol. 30, 105-130 (1979)
12) Dixon R.A., Day, P.M. And Lamb, C. J.; Avd. Enzymol. 55, 1-136 (1983)
13) Van Leon; L. C. ; Plant Mol. 4, 111-116 (1985)
14) Bol., J., Linthorst, H., and Cornelissen; Ann. Rev. Phytopathol. 28, 113-138 (1990)
15) Linthorst, H.; Critical Reviews in Plant scoences 10, 132-150 (1991)
16) Bowles, D. J., Ann. Rev. Biochem. 59, 873-907 (1990)
17) Ryan, Ann Rev. Cell Biol. 3, 295-317 (1987)
18) Mauch et al., Plant Cell. 1, 447-456
19) Lamb et al., Cell 56, 215-220 (1989)
20) Stock, S.P, Camino, N.B., Microorganismos Patógenos empleados en el control biológico de plagas, R.E. Lecuona, p 105-131, (1996)
21) Poinar, G. O. Jr. 1989. Nematodes for Biological Control of Insects. Boca Raton, Fl: CRC. 277 pp.
22) Chen, G. Et al. Journal of invertebrate Pathology, 68, 101-108 (1996)
23) Nguyen, K.B., Smart, G.C.; 1992. Steinernema Neocartillis n. Sp. (Rhabditida: Steinernematidea) and a key to species of the genus Steinernema. Journal of Nemtology, 24,: 463-477
24) Aguilera de Doucet, M. Laumond, C;1996. Microorganismos Patógenos empleados en el control biológico de insectos plaga. Cap.25.
25) Garcia del Pino, F., Palomo, A.; 1996. Journal of Invertebrate Pathology 68, 84-90. Article n°0062
26) Philip W. Maxwell et al, Applied and Environmental Microbiology, Feb.1994, p. 715-721.
27) Jaworska, M., et al. 1999. Journal of Invertebrate Pathology 73, 228-230.
28) Gorsuch, A. M. 1982. Regulations for the enforcement of the Federal Insecticide, Fungicide and Rodenticide. Act exemption from regulation of certain Biological control agents. Fed. Regist. 47: 23928-30
29) Nickle, W. R., Drea, J.J, Coulsan, J.R 1998. Guidelines for introducing beneficial insect-parasitie Nematodes into the US. Ann. Nematol. 2:50-56.

### DETAILED DESCRIPTION OF THE INVENTION

### The entomopathogenic enematode strains:

The entomopathogen nematode strains used are isolated in the Iberian Peninsula, Canary Islands, Balearic Islands and other countries of the world. This is essential due to the fact that these strains are better adapted to the conditions of the edaphic ecosystems in which their biological cycle is developed. On the other hand, in our legislation there are rules which regulate the introduction of non-autochthonous organisms that could break the ecological balance and which establish the need to perform the corresponding studies of environmental impact involved by their introduction. These nematode species are found in other places of their remaining continents, also isolated by us⁵.
Said strains were submitted to biotests to establish their pathogenicity. The biotests consisted of exposing Galleria mellonella larvae to juvenile infectives of different strains.

The invention is based on the fact that the nematodes, Steinernema and Heterorhabditis may normally live in chitosan solutions. In this way, the nematode carries out its action against pests affecting farm-forest crops and besides prevents the future development of phytopathogenic bacteria and fungi, increasing the resistance of the plant to them and also collaborating in the assimilation of chitosan by the plant. The action of the biostimulant consists of, on the one hand, aiding the regeneration of damaged tissues. Moreover, it increases the development of the radicular system, reinforces the degree of lignification, reduces dehydration and finally exerts fungi static effect. The synergic action of pesticide and biostimulant consists of inducing in the plant a secondary secretion of lignin, gibberelines and phytoalexins, accelerating their development and strength, once the pest affecting it has been eradicated. All these positive effects involve an increase in crop quality and yield without damaging effects for the environment.

### Synergic entomopathogenic chitosane-nematode action

When a plant is attacked by a pest, it is essential to eliminate it, but it is also necessary to consider the lesions and side effects (deficiencies, stress, possible infections or re-infections...) the pest has caused. The novelty of the combination of a biological insecticide with a growth enhancer makes the treatment directed towards pests considerably more effective.

On the one hand, the entomopathogenic nematode kills and efficiently eliminates the pest. Likewise, the associated bacteria, during the host insect infection process, starts to release a series of metabolites, such as chitionolytic enzymes²² and antibiotics²⁶. The chitinolytic action of the enzymes released by the bacteria, makes the assimilation process of the chitosan by the plant, faster, given that said enzymes act by breaking the N-acetyl-glucosamine polymers to molecules (monomers and dimers of n-acetylated sugars) more easy to assimilate by the plant. On the other hand, the anti-fungal activity of chitosan is enhanced by the anti-mycotic activity of said enzymes and the activity of the antibiotic compounds released by the bacteria inhibit the proliferation of possible facultative pathogenic micro-organisms. All the latter makes the recovery process of the plant, promoted by the chitosan, even faster and more effective.

Within the chitosan composition, there are certain ions, like Mn (II) and Mg. It has been verified that particularly these two ions produce a chemical stimulation in the entomopathogenic nematodes increasing their pathogenicity and productivity²⁷.

The combination of entomopathogenic nematodes with chitosan has the following biological effects:
* Entomopathogenic nematodes eliminate the pest, preventing the development of possible bacteria and phytopathogenic fungi, while their symbiotic bacteria collaborate in the assimilation of chitosan.
* Mg and Mn (II) ions in the chitosan, chemically enhance the pathogenicity and productivity of the nematode
* Chitosan increases the development of the radicular system, significantly reinforcing the energy and degree of plant lignification, exerting a fungistatic effect and reducing post-transplant dehydration in nursery and/or transplant species.
* The synergistic action of entomopathogenic nematodes with chitosan induces the plant to secondarily segregate lignin, gibberelines and phytoalexins for its development and reinforcement.

### Formulation

It contains the entomopathogenic nematode, preferably of the genera Steinernema or Heterorhabditidae , at a concentration of 1,000-2,000,000 per m2 of surface to be treated. The nematode is dissolved in a chitosan solution with a viscosity (measured at 25°C, in a 1% concentration, in 1% acetic acid, in a Brookfield viscometer) from 150 to 2000 cps, preferably 150-450 cps, and more preferably, 200-250 cps, with a deacetylation degree (DAC) of 50-99%, preferably 65-99% and at a concentration between 0.06-0.25%, preferably 0.08-0.18%, in a weak acid (acetic, adipic, citric, formic, lactic, malic, oxalic, pyruvic, tartaric or similar) at a concentration of 0.05-10% (v/v), adjusting the pH to a range from 4-7 with a base (sodium hydroxide, sodium carbonate, potassium hydroxide, etc.). This formulation contains Mn(II) and Mg ions in ranges of 1-400 pm and 1-200 ppm, respectively.

### Application Method

The application method of this biological product in the field may be performed by different methods, depending on the crop, understanding that the application methods are not exhaustive, that is, other similar non-excluding methods may exist, such that they may be used successively or simultaneously over the same or different plants.

The JI may support pressures of up to 21 atmospheres. As conventional farming equipment normally works at these pressures, the nematodes may be applied by means of any of the conventional methods.

For pests having any stage of life cycle on the ground, product application may be performed, both by irrigation or root immersion or any system creating a humid bulb around the plant. However, for foliar pests, the product is directly applied over the aerial parts of the plant with the different conventional farming spray systems.

Chitosan forms a film which stabilises and improves the adhesion of the agent going with it, and said film also decreases the amount of UV light reaching the agent. In a foliar application of nematodes with chitosan, the latter acts as a protective agent against desiccation and the action of UV light, the main enemies of nematodes when not applied on the ground.

The chitosan solution plus nematodes of the invention may also be applied as: spreadable paste or spray. Likewise, besides the chitosan and the nematodes, it may contain fixing agents, wetting agents or hydrating agents. The inventive formulations are not only applicable for the treatment of plants to prevent or control pests, but may be applied to seeds, soils or farming structures, preferably wood, preventively or in treatment against the contamination thereof.

### Dose and tests performed

Field and laboratory tests were made on a petri dish, flower pot and trays. Said tests were performed jointly with the company Aplicaciones Bioquímicas, S.L., officially recognised with the number EOR28/97 by the Ministry of Agriculture, Fisheries and Food for performing official tests complying with their standardised operating procedures and protocols under the E.P.P.O. directives (European Plant Protection Organisation) of the European Community.

The tests were performed on insect pest families. The most representative examples were selected due to the damage caused to crops, not excluding other insects of the same family.

In all the examples, chitosan solutions have been used whose composition is 1.25%, with a 70% degree of deacetylation DAC, dissolved in 1% acetic acid, the pH being 4.9. These solutions were applied diluted.

In all the examples, the nematode used was Steinernema spp., except in examples X, XI, XII and XIV which used Heterorhabditis spp. With the term spp. we group all the species present in said genus.

Chitosan naturally contains Mn and Mg ions in proportions of 5 and 7 ppm, respectively, which perform as nematode pathogenicity enhancers (nevertheless, these ions as commercial salts may be added afterwards).

In the cultures on a Petri dish, the method described by Kaya & Stock (Example III) was followed. The concentration of larvae was 20/dish, except in Example V, which used 100 larvae/dish. In flower pots we used a substrate of 50% vermiculite and 50% sterile earth and the concentration of the larvae was 20 larvae/flowerpot in all cases.

All the examples were subject to the EPPO regulations describing the statistical design and evaluations of the tests performed. The production increase was measured in Kg weight. We used the term "recovery" when we began to observe the healing of the damage caused by the pest.

The fixing agents, wetting agents and hydrating agents that may be used in the invention may be encompassed in the term of coadjuvants for general use in agriculture. For example: paraffin mineral oil, propionic acid, fatty alkylamides, waxes, sodium dioctyl sulphosuccinate, resins, synthetic latex, fatty acids, ionic and non-ionic surfactants, manures, fertilisers.

Mn and Mg salts are of common use in agriculture and are found in different commercial forms, like, for example, complexing agents (lignosulphonic acid) and chelating agents (EDTA) and phosphite solutions of Mn or Mg (2-13%).

The product dissolved in water as an application vehicle was applied by means of different systems: drip irrigation, radicular immersion, pulverisation...

Several tests have been made with different types of plague and crops. In all the tests, the chitosan dose applied was 50 cc of a solution of chitosane/1,000,000 nematodes.

The results obtained in said tests were the following ones:

### EXAMPLE 1:

The product was applied on stone fruit trees (cherry trees, apricot trees, plum trees...) affected by Capnodis tenebrionis (Coleopteran) by different systems: drip irrigation, injection pouches and pans around the tree roots. The doses used were: 300,000 nematodes/tree, 500,000 nematodes/tree, 1,000,000 nematodes/tree and 2,000,000 nematodes/tree, some of them combined with a chitosane solution. The ground temperature was about 25°C. The effectiveness regarding the mortality obtained was 75%, 90%, 100% and 100%, respectively, compared with the references, not finding differences in the application method. Also, it was verified that in trees in which chitosane was not added, the recovery of the lesions caused by the pest commenced at 8 months. On the contrary, the healing of the lesions in trees treated with chitosan, commenced at 30 days. Moreover, a mean increase in production of 32% was obtained (in Kg).

### EXAMPLE II:

Citrus trees affected by Phyllonictis citrella were treated by means of pulverisation over the leaves. The doses used were 500,000 nematodes/tree and 1,000,000 nematodes/tree, combining them with a chitosane solution. The environmental temperature was about 27°C and there was a high relative humidity. An effectiveness was obtained regarding mortality of 85% and 100%, respectively, comparing them with the references, both over larvae and adults. The new shoots of the branches continued their normal development.

### EXAMPLE III:

On the one hand, squares of bee hives affected by the plague Galleria mellonella (Lepidoptera) were treated, and on the other, larvae on Petri dishes with filter paper (Kaya, H.K., Stock, P., Chapter VI "Manual of Techniques in Insect Nematology", Laurence Lacey Ed., Biological Technique Series, pp. 281-324, 1997, Academic Press) in the laboratory. The product was applied by pulverisation at a dose of 5,000,000 nematodes/hive and at a dose of 100 nematodes/larva on dishes with 20 larvae each one, combining it in both cases with a chitosane solution. The temperature was maintained between 23-27°C and a relative humidity between 80-90%. A 90% efficacy regarding mortality of G. mellonella was obtained in the hive squares and 100% on the Petri dishes, comparing them with reference squares and plates.

### EXAMPLE IV:

Flower pots and Petri dishes with filter paper were treated (Kaya, H.K., Stock, P., Chapter VI Manual of Techniques in Insect Nematology, Laurence Lacey Ed., Biological Technique Series, pp. 281-324, 1997, Academic Press) in the laboratory with Melolontha melolontha (Lepidoptera). The flowerpots with 20 larvae each one, contained sterile earth (50%) mixed with vermiculite (50%), with a relative humidity of 80-90% and a temperature between 20-28°C. A dose in the flower pot of 300,000 nematodes/flower pot was applied, and 100 nematodes/larva on the Petri dishes (each one with 20 larvae), combining them in all cases with a chitosan solution. A 100% efficacy regarding larval mortality was obtained in both cases, with respect with the reference flowerpots, after 12 days in the flowerpots and 5 days on the Petri dishes.

### EXAMPLE V:

Vineyards affected by Kalotermes flavicollis (Isoptera) were treated using different application methods: spraying over the trunk, injection around the roots and micro-injection in the trunk. The doses used were 1,000,000 nematodes/stock and 2,000,000 nematodes/stock. All the applications were performed together with a chitosan solution. The temperature ranged from 23-28°C. The effectiveness regarding mortality of K. Plavicollis was:
spray at 1,000,000 nematodes/stock: 90%
spray at 2, 000, 000 nematodes/stock: 95%
Injection at 1,000,000 nematodes/stock: 80%
Injection at 2,000,000 nematodes/stock: 95%
Micro-injection in the trunk at 1,000,000 nematodes/stock: 90%
Micro-injection in the trunk at 2,000,000 nematodes/stock: 95%.

Tests were also made on Petri dishes with filter paper and 100 of the latter Isoptera, spraying them with nematodes in a dose proportional to the dish surface, obtaining an effectiveness of 100% after 5 days.

The Isoptera order has the property of tropholaxia, hence producing a chain effect throughout the whole termite nest and its affected parts, reaching the queen to kill it and hence, break the social chain of the termite nests, definitely finishing with it.

### EXAMPLE VI

The product was applied to banana trees affected by Cosmopolites sordidus in different ways: micro-aspersion, injection with pouch and by application over traps with pheromones. The doses used were: 500,000 nematodes/tree, 1,000,000 nematodes/tree and 1,500,000 nematodes/tree, all of them combined with a chitosan solution. With a temperature ranging from 20-28°C and 70-80% relative humidity. The effectiveness regarding mortality of C. sordidus was:
Micro-aspersion at 500,000 nematodes/tree: 80%
Micro-aspersion at 1,000,000 nematodes/tree: 90%
Micro-aspersion at 1,500,000 nematodes/tree: 100%
Injection by pouch at 500,000 nematodes/tree: 80%
Injection by pouch at 1,000,000 nematodes/tree: 95%
Injection by pouch at 1,500,000 nematodes/tree: 100%
Over traps with pheromones at 500,000 nematodes/tree: 95%
Over traps with pheromones at 1,000,000 nematodes/tree: 100%
Over traps with pheromones at 1,500,000 nematodes/tree: 100%

In the references, the plants gave way to the weight of the bunch of bananas due to the damage caused by the weevil at the base of the stem. However, this was not observed in the treated plants.

### EXAMPLE VII

Flowerpots containing 10 Capnodis tenebrionis larvae and 10 Galleria mellonella larvae were treated. This test intended to check up to which height the nematode could climb in search of a host. The flowerpot contained earth and vermiculite. Nematodes were added at a dose of 100,000 nematodes/flower pot. A mesh was placed through which the nematodes could pass, but not the Capnodis larvae. This mesh was installed at 20-35 cm height, then adding earth with the larvae. Maintaining a high degree of humidity in the flowerpot at an environmental temperature between 23-26°C, it was observed that the product had an effectiveness of 100% (dead larvae with respect to the reference) after 20 days. Concluding that said nematodes receive stimulus from the larvae (exudates, emitted CO2 and even the own body temperature) at a distance of up to 1 m long.

### EXAMPLE VIII

The product was applied in vineyards of dessert grapes attacked by Vesperus xatarti by injection over the drip irrigation with a dose of 1,000,000 nematodes/tree, combining it with chitosane. A humidity was maintained with normal irrigation in the root bulb and the temperature was about 27°C. The effectiveness obtained was 100% (dead insects with respect to the reference) controlling the pest and obtaining an increase in fruit production in each stock.

### EXAMPLE IX

Vineyards were treated, attacked by Xylotrechus arvicola. The application was carried out by different methods combining all of them with chitosan. The results were:
- Application by spraying at a dose of 750,000 nematodes/stock, obtaining an effectiveness of 75% (dead insects with respect to the reference).
- Application by spraying at a dose of 750,000 nematodes/stock, with a reinforcing dose of 750,000 nematodes/stock the following month, obtaining an efficiency of 85% (dead insects with respect to the reference).
- Micro-injection over the trunk at a dose of 750,000 nematodes/stock, obtaining an effectiveness of 85% (dead insects with respect to the reference).
- Micro-injection over the trunk at a dose of 750,000 nematodes/stock, with a second reinforcing application of another 750,000 nematodes/stock, the following month, obtaining an effectiveness of 95% (dead insects with respect to the reference).

In all cases, a fast recovery was observed, healing of the lesions commencing at 30 days. The following year, it was observed that totally collapsed branches showed spring leaf buds (start of sprouting).

### EXAMPLE X

Garden produce (lettuce, tomato, pepper, carrots, ...)attacked by Agrotis segetum were treated by spraying over leaves and the ground. A dose of 1,000,000 nematodes/m2 was used, maintaining humidity around the plant and a variable temperature between 23-28°C. The effectiveness produced in pest control was 100% with respect to the reference, both in the aerial parts of the plant and the underground parts.

### EXAMPLE XI

Pip fruit trees (apple tree and pear tree) attacked by Hoplocampa testudinea were treated. The application was performed by pulverisation with a dose of 1,500,000 nematodes/tree combined with 50 ml chitosan solution per plant foot. The effectiveness in pest control produced was 90% with respect to the reference. The latter, together with healing of lesions led to an average increase in production of 45% (in Kg).

### EXAMPLE XII

Conifers attacked by Thaumetopoea pytiocampa were treated. The application was performed over the pockets (by spraying and ground (by irrigation) surrounding the tree. A dose of 500,000 nematodes/tree was used on the ground and 500,000 nematodes/pocket, combining both of them with chitosan. An effectiveness of 100% was obtained for pest control with respect to the reference. Moreover, the treatment was favoured because the larvae developed in the pocket until a temperature of 30°C and those larvae which fell to the ground from the pocket were also infected by nematodes as the ground was also treated.

### EXAMPLE XIII

Pip fruit trees (apple and pear) affected by Cossus cossus were treated. The application was performed by injection in the drip irrigation at a dose of 1,000,000 nematodes/tree and a variable temperature between 24-27°C. The effectiveness was 100% (dead insects with respect to the reference)after six months.

### EXAMPLE XIV

Industrial sugar beet attacked by Cleonus mendicus, Lixus junci and Lixus scabricollis were treated. The product was applied combining two systems: injection around the plant and spraying over the leaves, killing both the ground larvae and the adults on the leaves. The ground temperature was 25°C and the environmental one, 30°C. The dose used was 500,000 nematodes/m2 and 1,000,000 nematodes/m2. The effectiveness with respect to the reference over pest control was 80% and 95%, respectively. A closure of the lesions caused by the pests was observed, consequently leading to an average production increase of 10% (in Kg) and 0.75 polarimetric degrees of sugar measured with refractometer.

### EXAMPLE XV

Garden produce (tomato, peppers, ...) affected by Liriomyza trifolii were treated. The application was by pulverisation over the leaves combining it with the chitosane solution. The doses used were 250,000 nematodes/m2, 500,000 nematodes/m2, 1,000,000 nematodes/m2. The effectiveness regarding pest mortality was 100% in all doses, with respect to the reference, but it was observed that the higher the dose used, faster the effect, hence the highest dose had an effectiveness of 100% at two days, whilst the lowest dose reached this effectiveness at 6 days.

### EXAMPLE XVI

Peppers and cotton crops in a field affected by Heliothis armigera were treated by means of spraying at a dose of 500,000 nematodes/m2 and 1,000,000 nematodes/m2. The environmental temperature of the glasshouse was 30°C and the humidity 75-80°. The effectiveness was 100% (dead insects with respect to the reference) at both doses.

### EXAMPLE XVII

Tomato and pepper plants attacked by Trialeudores vaporariorum were treated by spraying and micro-aspersion. The doses used were 500,000 nematodes/m2 and 1,000,000 nematodes/m2. The environmental temperature of the glasshouse was 30°C and the relative humidity, 85%. The effectiveness regarding plague mortality was 100% with respect to the reference at both doses, both in adults and larvae.

### EXAMPLE XVIII

Pip fruit trees (apple and pear-tree) affected by Zeuzera pyrina were treated by injection over the wholes produced by the pest. A dose of 10,000 nematode/hole was used, wetting afterwards. The effectiveness regarding pest mortality was 80% with respect to the reference.

Another method used for the application was the spraying of branches, trunk and leaves with symptoms. The spraying was carried out on the last hour of the day, to take advantage of the freshness and the dew of dawn. In this treatment, the effectiveness regarding pest mortality was 100% with respect to the reference.

### EXAMPLE XIX

In glasshouses, the peppers affected by Spodoptera littoralis were treated by spraying over the leaves and the ground, at a dose of 1,000,000 nematodes/m2, combined with chitosan. The environmental temperature ranged between 25 and 27°C, with a high relative humidity. The effectiveness of the treatment was 100% (dead insects with respect to the reference) after 2 months. It was observed that the nematodes reached the insects located inside the fruit.

### EXAMPLE XX:

Cauliflower crops attacked by Pieris rapae were treated. The application of the product was performed by spraying over the plants and the ground. The doses used were 500,000 nematodes/m2 and 1,000,000 nematodes/m2, both combined with chitosan. The environmental temperature was 28°C. After 2 months the effectiveness regarding pest control was 75% and 95%, respectively, compared with the reference.

### EXAMPLE XXI

Apple trees attacked by Cydia pomonella were treated. The application of the product was carried out by spraying over leaves and branches, with an initial dose of 500,000 nematodes/tree and a reinforcement dose of 500,000 nematodes/tree, the following month. The effectiveness produced regarding pest mortality was 90%, with respect to the reference, after 4 months from the last treatment.

### EXAMPLE XXII

Plum trees attacked by Certitis capitata were treated by spraying over leaves and branches. The initial dose used was 500,000 nematodes/tree and that of reinforcement, 500,000 nematodes/tree, applied the following month. The effectiveness regarding pest mortality was 95%, with respect to the reference after 4 months.

### EXAMPLE XXIII

Rice plantations affected by Chilo suppresalis were treated by pulverisation over the canes with a dose of 500,000 nematodes/m2 in June and another 500,000 nematodes/m2, in August, both combined with chitosan. The effectiveness regarding pest mortality was 85% with respect to the reference.

### EXAMPLE XXIV:

A house affected by Reticulitermes lucifugus was treated. The application of the product was carried out by spraying over the different loci. The dose used was 500,000 nematodes/m2, maintaining the humidity during the 5 days following treatment. The effectiveness regarding pest mortality was 90% with respect to the reference after 30 days. In this case, trophalaxia also occurred, favouring treatment effectiveness.

### EXAMPLE XXV

A house infected by Hylotrupes bajulus was treated. The application was performed by injection in the affected wood conduits. The doses used was 1,000 nematodes/hole. The humidity was maintained during the following 4 days. The effectiveness regarding pest mortality was 100% with respect to the references, after 45 days.

### EXAMPLE XXVI

In cherry trees and plum trees, over Capnodis tenebrionis, by injection in the drip system, it was observed that at doses of 500,000 nematodes/tree, combined with 40 ml chitosane solution, with a relative humidity of 80% and an environmental and ground temperature about 25°C, the effectiveness was about 90-92% regarding the infective pest, after 21 days; also, it was observed that in those trees in which chitosan was not added, the recovery is slower. More specifically, using the pesticide with chitosan, new shoots began to sprout from the ill tree once cured, six weeks after treatment. Using the pesticide without chitosan, the shoot did not emerge until after 4 or 5 months.

### EXAMPLE XXVII

In an orange tree, over Phyllonictis citrella, the method used was the spraying of the leaves of the infected plant. After the study of several concentrations of entomopathogenic nematodes, plus chitosan, we verified that the most effective dose against said pest was 1,000,000 nematodes/tree combined with 40 ml chitosane solution. With this dose, we observed that the new tree shoots were not attacked by said pest.

By studying the nematode persistence tests in the field, we verified that said persistence was from 6 to 9 months.

## Claims

1. A biological pesticide formulation, consisting of:
* An entomopathogenic nematode.
* Chitosan with a viscosity between 150 and 450 cps, and a degree of deacetylation between 50-99%, at a concentration between 0.08 and 0.18%.
* A weak acid at a concentration of 1 to 10% (v/v), the pH of said formulation being adjusted in a range of 4-7.

2. A biological pesticide formulation consisting of:
* An entomopathogenic nematode.
* Chitosan with a degree of deacetylation between 50-99%, at a concentration between 0.06 and 0.25%.
* A weak acid at a concentration of 0.5 to 10% (v/v), the pH of said formulation being adjusted in a range of 4-7.
* Mn (II) and Mg ions, associated and/or added to chitosan.

3. A formulation according to claims 1 and 2, in which the entomopathogenic nematode belongs to the Steinernematidae or Heterorhabditidae families.

4. A formulation according to claims 1 to 3, in which the nematode concentration varies from 1,000-2,000,000/m2 surface to be treated.

5. A formulation according to claims 1 to 4, in which the chitosan has a viscosity ranging from 150 to 2000 cps.

6. A formulation according to claims 1 to 5, in which the weak acid is selected among acetic acid, adipic acid, citric acid, formic acid, lactic acid, malic acid, oxalic acid, pyruvic acid and tartaric acid.

7. A formulation according to claims 1 to 6, in which the pH is adjusted by means of a base preferably selected from sodium hydroxide, sodium carbonate and potassium hydroxide.

8. A formulation according to claims 2 to 7, in which the concentration of Mn (II) and Mg ions vary in a range of 1-400 ppm and 1-200 ppm, respectively.

9. A formulation according to claims 1 to 8, which further comprise commercial farming coadjuvants, specifically selected among fixing agents, wetting agents and hydrating agents or mixtures thereof.

10. A method to increase the resistance of a plant against a pest, consisting of applying to the former, the formulation of claims 1 to 9, by means of root immersion.

11. A method to increase the resistance of a plant against a pest, consisting of applying to the former the formulation of claims 1 to 9 by means of irrigation or any other conventional farming application method, until the surface of the roots is substantially wetted to transplant it, plant it or maintain it under irrigation during its vital cycle.

12. A method to increase the resistance of a plant against a pest, consisting of applying to the former the formulation of claims 1 to 9 by spraying, preferably foliar.

13. A method to increase the resistance of a plant against a pest, consisting of applying to the former the formulation of claims 1 to 9 by means of injection at the foot of the tree.

14. A method to increase the resistance of land against a pest prior to plantation, consisting of applying to the same the formulation of claims 1 to 9.

15. The use of any of the formulations of claims 1 to 9, according to any of the treatment methods of claims 10 to 14, for the treatment of plants against a pest of any species selected from: among the order Lepidoptera, preferably the species:
- Chilo spp.,
- Galleria mellonella,
- Spodoptera littoralis,
- Pieris rapae,
- Agrotis segetum,
- Thaumetaopoea pytiocampa,
- Zeuzera pyrina or the order Coleoptera, preferably the species:
- Melolontha melolontha,
- Vesperus xatarti,
- Cosmopolites sordidus,
- Capnodis tenebionis,
- Cleonus mendicus,
- Hylotrepes bajulus, or the order Diptera, preferably the species:
- Ceratitis capitata,
- Bemisia spp,
- Trialeudores vaporarium,
- Liriomyza trifolii, or the order Acarim, preferably the species:
- Boophilus pinniperda,
- Dermacentor vaviabilis,
- Amblyoma cajennense, or the order Heteroptera, preferably the species:
- Dysdercus peruvianus, or the order Homoptera, preferably the species:
- Dysmicoccus vaccini, or the order Isoptera, preferably the species:
- Reticulotermes spp,
- Kalotermes flavicollis,
- Glyptotermes dilatatus, or the order Gastropoda, preferably the species:
- Deroceras reticulatum, or the order Orthoptera, preferably the species:
- Locusta migratoria
- Melanoplus sanguinipes,
- Scapteriscus vicinus, or the order Ixodida, preferably the species:
- Ripicephalus sanguineus, or the order Blatodea, preferably the species:
- Periplaneta brunne, or the order Hymenoptera, preferably the species:
- Tirathaba rufivena,
- Elasmopalpus lignosellus,
- Hoplocampa testudinea.
Or any other species among those mentioned in the following table:
| Species | |
|---|---|
| Acalyma vittatum | Chilo spp |
| Acrolepia assectela | Choristeneura occidentalis |
| Adoryphorus couloni | Cirphis compta |
| Agrotis ipsilon | Conopia myopasformis |
| Agrotis paluatris | Conorhynchus mendicus |
| Agrotis segetum | Cosmopolites sordidus |
| Amyelois transitella | Costrelytra zealandica |
| Anabrus simplex | Curalio caryae |
| Anomala spp. | Cyclocephala borealis |
| Anoplophora malasiaca | Cydia pomonella |
| Apriona cinerea | Cydocephala hirta |
| Blastophagus pinniperda | Cylus formicarius |
| Boophilus annulatus | Dacus cucurbitae |
| Bradysia coprophila | Delia antiqua |
| Capnodis tenebrionis | Delia floralis |
| Carpocapsa pomonella | Delia platura |
| Carposina nipponensis | Delia radicum |
| Castnia dedalus | Dendroctonus frontalis |
| Cephalcia abietis | Dermacentor vaviabilis |
| Cephalcia lariciphila | Deroceras reticulatum |
| Ceratitis capitata | Diabrotica balteata |
| Ceuthorrynchus napi | Diabrotica barberi |
| Diabrotica virginifera | Limonius califormicus |
| Diaprepes abbreviatus | Liriomyza trifolii |
| Dysdercus peruvianus | Listronotus orejonenais |
| Dysmicoccus vaccini | Locusta migratoria |
| Earias insulana | Lycoriella auripila |
| Eldana spp. | Maladera motrica |
| Galeria melonella | Manduca sexta |
| German cockroach | Megaselia halterata |
| Glyptotermes dilatatus | Melanoplus sanguinipes |
| Grapholita funebrana | Migdolus spp. |
| Grapholita molesta | Monochanus alternatus |
| Graphonathus peregrinus | Musca domestica |
| Helicoverpa zea | Memocestes incomptus |
| Heliothis armigera | Oamona hirta |
| Heliothis zea | Operhoptera brumata |
| Hylenia brasicae | Opogona sacchari |
| Hylobius abietia | Ostrinia nubilalis |
| Hylotrepes bajulus | |
| Hylobius transversovittatus | Otiorhynchus ovatus |
| Hypantria cunea | Otiorhynchus sulcatus |
| Ixodes scapularis | pachnaeus litus |
| Ixodid ticks | Panisetia marginata |
| Laspeyresia pomonella | Pantomorus spp. |
| Leptinotarsa decenlineata | Pectinophora gossyprella |
| Periplaneta brunnea | Strobilomyia appalachensis |
| Phlyctinus callosus | Thaumetopoea pytiocampa |
| Phyllotreta cruciferae | Tirathaba rufivena |
| Phylophaga app. | Tomicus pinniperda |
| Pieris rapae | Tryporysa incertulas |
| Platiptilia carduidactyla | Vietacea polistiformis |
| Plutella xylostella | Wiseana copularis |
| Polyphylla spp. | Zeiraphera canadensis |
| Pseudaletia separata | Zeusera pyrina |
| Pseudexentera mali | Zophodis grossulatariata |
| Psylliodes chrysocephala | Phyllonictis citrella |
| Pyrrbalta luteola | Xylotrechus arvicola |
| Rhipicephalus sanguineus | Trialeudores vaporarium |
| Rhizotropus majalis | Melolontha melolontha |
| Rhyacionia buolinana | Tipula paludosa |
| Rhyacionia frustrana | Blatella germanica |
| Rusidrina depravata | Vespula spp |
| Scapteriscus vicinus | Lixus spp |
| Sitoma lineatus | Reticulitermes lucifugus |
| Sitona discoideus | Parapediasia teterrella |
| Sphenophorus parvulus | Fumibotys fumalis |
| Spodoptera exigua | Bemisia spp |
| Spodoptera litura | Longitarsus waterhorsei |

16. Use of the formulation of claims 1 to 9, as a spreadable paste.

17. Use of the formulation of claims 1 to 9, as a dry spray, mixed with the nematode solution.

18. Use of the formulation of claims 1 to 9, for application to contaminated seeds.

19. Use of the formulation of claims 1 to 9, for application in farming structures or tools, especially of wood, having some degree of contamination.

20. Use of the formulation of claims 1 to 9, preventively applied on land and plants to prevent the development of pests in them.

## Patentansprüche

1. Biologische Pestizidzusammensetzung, bestehend aus:
* Einem entomopathogenen Nematod.
* Chitosan mit einer Viskosität zwischen 150 und 450 cps, und einem Deacetylierungsgrad zwischen 50-99%, bei einer Konzentration zwischen 0,08 und 0,18%.
* Einer schwachen Säure mit einer Konzentration von 1 bis 10% (V/V), wobei der pH dieser Zusammensetzung im Bereich 4-7 eingestellt wird.

2. Biologische Pestizidzusammensetzung, bestehend aus:
* Einem entomopathogenen Nematod.
* Chitosan mit einem Deacetylierungsgrad zwischen 50-99%, bei einer Konzentration zwischen 0,06 und 0,25%.
* Einer schwachen Säure mit einer Konzentration von 0,5 bis 10% (V/V), wobei der pH dieser Zusammensetzung im Bereich 4-7 eingestellt wird.
* An das Chitosan gebundene und/oder dem Chitosan zugefügte Mn (II)- und Mg-Ionen.

3. Zusammensetzung nach den Ansprüchen 1 und 2, bei welcher das entomopathogene Nematod zu der Familie Steinernematidae oder Heterorhabditidae gehört.

4. Zusammensetzung nach den Ansprüchen 1 bis 3, bei welcher die Nematodenkonzentration zwischen 1.000-2.000.000/m² der zu behandelnden Fläche schwankt.

5. Zusammensetzung nach den Ansprüchen 1 bis 4, bei welcher das Chitosan eine Viskosität zwischen 150 und 2000 cps aufweist.

6. Zusammensetzung nach den Ansprüchen 1 bis 5, bei welcher die schwache Säure zwischen Essigsäure, Adipinsäure, Zitronensäure, Ameisensäure, Milchsäure, Apfelsäure, Oxalsäure, Brenztraubensäure und Weinsäure ausgewählt wird.

7. Zusammensetzung nach den Ansprüchen 1 bis 6, bei welcher der pH mittels einer Base, die bevorzugt aus Natriumhydroxid, Natriumcarbonat und Kaliumhydroxid ausgewählt wird, eingestellt wird.

8. Zusammensetzung nach den Ansprüchen 2 bis 7, bei welcher die Konzentration der Mn (II)- und Mg-Ionen jeweils im Bereich 1-400 ppm bzw. 1-200 ppm schwankt.

9. Zusammensetzung nach den Ansprüchen 1 bis 8, die zusätzlich kommerzielle landwirtschaftliche Zusatzstoffe, die spezifisch aus Fixiermittel, Netzmittel und Hydratisierungsmittel oder Mischungen derselben ausgewählt werden, enthält.

10. Methode zur Erhöhung der Widerstandskraft einer Pflanze gegen Schädlinge, die daraus besteht, die Zusammensetzung der Ansprüche 1 bis 9 mittels Eintauchen der Wurzel auf dieser aufzutragen.

11. Methode zur Erhöhung der Widerstandskraft einer Pflanze gegen Schädlinge, die daraus besteht, die Zusammensetzung der Ansprüche 1 bis 9 mittels Berieselung oder eine beliebige andere konventionelle Auftragsmethode auf dieser aufzutragen, bis die Oberfläche der Wurzeln im Wesentlichen befeucht ist, um sie umzupflanzen, zu pflanzen oder während ihres Lebenszyklus unter Berieselung zu halten.

12. Methode zur Erhöhung der Widerstandskraft einer Pflanze gegen Schädlinge, die daraus besteht, die Zusammensetzung der Ansprüche 1 bis 9 mittels Zerstäubung auf dieser, bevorzugt auf den Blättern, aufzutragen.

13. Methode zur Erhöhung der Widerstandskraft einer Pflanze gegen Schädlinge, die daraus besteht, die Zusammensetzung der Ansprüche 1 bis 9 durch Einspritzung am Baumfuß auf dieser aufzutragen.

14. Methode zur Erhöhung der Widerstandskraft des Feldes gegen Schädlinge vor einer Bepflanzung, die daraus besteht, die Zusammensetzung der Ansprüche 1 bis 9 auf dieses aufzutragen.

15. Einsatz einer beliebigen Zusammensetzung der Ansprüche 1 bis 9, nach einer beliebigen Behandlungsmethode der Ansprüche 10 bis 14, zur Behandlung der Pflanzen gegen Schädlinge einer Spezies ausgewählt aus: innerhalb der Ordnung Lepidoptera, bevorzugt die Spezies:
- *Chilo spp.,*
- *Galleria mellonella,*
- *Spodoptera littoralis,*
- *Pieris rapae,*
- *Agrotis segetum,*
- *Thaumetaopoea pytiocampa,*
- *Zeuzera pyrina* oder die Ordnung Coleoptera, bevorzugt die Spezies:
- *Melolontha melolontha,*
- *Vesperus xatarti,*
- *Cosmopolites sordidus,*
- *Capnodis tenebionis,*
- *Cleonus mendicus,*
- *Hylotrepes bajulus*, oder die Ordnung Diptera, bevorzugt die Spezies:
- *Ceratitis capitata,*
- *Bemisia spp,*
- *Trialeudores vaporarium,*
- *Liriomyza trifolii*, oder die Ordnung Acari, bevorzugt die Spezies:
- *Boophilus pinniperda,*
- *Dermacentor vaviabilis,*
- *Amblyoma cajennense*, oder die Ordnung Heteroptera, bevorzugt die Spezies:
- *Dysdercus peruvianis* oder die Ordnung Homoptera, bevorzugt die Spezies:
- *Dysmicoccus vaccini*, oder die Ordnung Isoptera, bevorzugt die Spezies:
- *Reticulotermes spp,*
- *Kalotermes flavicollis*,
- *Glyptotermes dilatatus*, oder die Ordnung Gastropoda, bevorzugt die Spezies:
- *Deroceras reticulatum*, oder die Ordnung Orthoptera, bevorzugt die Spezies:
- *Locusta migratoria*
- *Melanoplus sanguinipes,*
- *Scapteriscus vicinus*, oder die Ordnung Ixodida, bevorzugt die Spezies:
- *Ripicephalus sanguineus*, oder die Ordnung Blatodea, bevorzugt die Spezies:
- *Periplaneta brunne*, oder die Ordnung Hymenoptera, bevorzugt die Spezies:
- *Tirathaba rufivena,*
- *Elasmopalpus lignosellus,*
- *Hoplocampa testudinea*.
Oder eine beliebige andere Spezies der in folgender Tabelle genannten:
| *Spezies* | |
|---|---|
| *Acalyma vittatum* | *Chilo spp* |
| *Acrolepia assectela* | *Choristeneura occidentalis* |
| *Adoryphorus couloni* | *Cirphis compta* |
| *Agrotis ipsilon* | *Conopia myopasformis* |
| *Agrotis palustris* | *Conorhynchus mendicus* |
| *Agrotis segetum* | *Cosmopolites sordidus* |
| *Amyelois transitella* | *Costrelytra zealandica* |
| *Anabrus simplex* | *Curalio caryae* |
| *Anomala spp.* | *Cyclocephala borealis* |
| *Anoplophora malasiaca* | *Cydia pomonella* |
| *Apriona cinerea* | *Cydocephala hirta* |
| *Blastophagus pinniperda* | *Cylus formicarius* |
| *Boophilus annulatus* | *Dacus cucurbitae* |
| *Bradysia coprophila* | *Delia antiqua* |
| *Capnodis tenebrionis* | *Delia floralis* |
| *Carpocapsa pomonella* | *Delia platura* |
| *Carposina nipponensis* | *Delia radicum* |
| *Castnia dedalus* | *Dendroctonus frontalis* |
| *Cephalcia abietis* | *Dermacentor vaviabilis* |
| *Cephalcia lariciphila* | *Deroceras reticulatum* |
| *Ceratitis capitata* | *Diabrotica balteata* |
| *Ceuthorrynchus napi* | *Diabrotica barberi* |
| *Diabrotica virginifera* | *Limonius califormicus* |
| *Diaprepes abbreviatus* | *Liriomyza trifolii* |
| *Dysdercus peruvianus* | *Listronotus orejonensis* |
| *Dysmicoccus vaccini* | *Locusta migratoria* |
| *Earias insulana* | *Lycoriella auripila* |
| *Eldana spp.* | *Maladera motrica* |
| *Galeria melonella* | *Manduca sexta* |
| *Deutsche Kakerlake* | *Megaselia halterata* |
| *Glyptotermes dilatatus* | *Melanoplus sanguinipes* |
| *Grapholita funebrana* | *Migdolus spp.* |
| *Grapholita molesta* | *Monochanus alternatus* |
| *Graphonatus peregrinus* | *Musca domestica* |
| *Helicoverpa zea* | *Nemocestes incomptus* |
| *Heliothis armigera* | *Oamona hirta* |
| *Heliothis zea* | *Operhoptera brumata* |
| *Hylenia brasicae* | *Opogona sacchari* |
| *Hylobius abietia* | *Ostrinia nubilalis* |
| *Hylotrepes bajulus* | |
| *Hylobius transversovittatus* | *Otiorhynchus ovatus* |
| *Hypantria cunea* | *Otiorhynchus sulcatus* |
| *Ixodes scapularis* | *Pachnaeus litus* |
| *Schildzecken* | *Panisetia marginata* |
| *Laspeyresia pomonella* | *Pantomorus spp.* |
| *Leptinotarsa decenlineata* | *Pectinophora gossyprella* |
| *Periplaneta brunnea* | *Strobilomyia appalachensis* |
| *Phlyctinus callosus* | *Thaumetopoea pytiocampa* |
| *Phyllotreta cruciferae* | *Tirathaba rufivena* |
| *Phylophaga spp.* | *Tomicus pinniperda* |
| *Pieris rapae* | *Tryporysa incertulas* |
| *Platiptilia carduidactyla* | *Vietacea polistiformis* |
| *Plutella xylostella* | *Wiseana copularis* |
| *Polyphylla spp.* | *Zeiraphera canadensis* |
| *Pseudaletia separata* | *Zeusera pyrina* |
| *Pseudexentera mali* | *Zophodis grossulatariata* |
| *Psylliodes chrysocephala* | *Phyllonictis citrella* |
| *Pyrrbalta luteola* | *Xylotrechus arvicola* |
| *Rhipicephalus sanguineus* | *Trialeudores vaporarium* |
| *Rhizotropus majalis* | *Melolontha melolontha* |
| *Rhyacionia buolinana* | *Tipula paludosa* |
| *Rhyacionia frustrana* | *Blatella germanica* |
| *Rusidrina depravata* | *Vespula spp* |
| *Scapteriscus vicinus* | *Lixus spp* |
| *Sitoma lineatus* | *Reticulitermes lucifugus* |
| *Sitona discoideus* | *Parapediasia teterrella* |
| *Sphenophorus parvulus* | *Fumibotys fumalis* |
| *Spodoptera exigua* | *Bemisia spp* |
| *Spodoptera litura* | *Longitarsus waterhorsei* |

16. Einsatz der Zusammensetzung der Ansprüche 1 bis 9, als auftragbare Paste.

17. Einsatz der Zusammensetzung der Ansprüche 1 bis 9, als Spray, der mit der Nematodenlösung gemischt ist.

18. Einsatz der Zusammensetzung der Ansprüche 1 bis 9, zum Auftragen auf verseuchte Samen.

19. Einsatz der Zusammensetzung der Ansprüche 1 bis 9, zum Auftragen auf landwirtschaftliche Strukturen oder Werkzeuge, besonders aus Holz, die einen gewissen Verseuchungsgrad vorweisen.

20. Einsatz der Zusammensetzung der Ansprüche 1 bis 9, wobei diese vorbeugend auf Felder und Pflanzen aufgetragen wird, um die Entwicklung von Schädlingen auf diesen zu vermeiden.

## Revendications

1. Formulation de pesticide biologique, qui consiste en:
* Un nématode entomopathogène.
* Chitosane avec une viscosité comprise entre 150 et 450 cps, et un degré de désacétylation compris entre 50 et 99%, à une concentration comprise entre 0,08 et 0,18%.
* Un acide faible à une concentration de 1 à 10% (v/v), le pH de la-dite formulation étant ajusté dans l'intervalle 4 - 7.

2. Formulation de pesticide biologique, qui consiste en:
* Un nématode entomopathogène.
* Chitosane avec un degré de désacétylation compris entre 50 et 99%, à une concentration variant de 0,06 à 0,25%.
* Un acide faible à une concentration variant de 0,5 à 10% (v/v), le pH de la-dite formulation étant ajusté dans l'intervalle 4 - 7.
* Ions Mn (II) et Mg, associés et/ou ajoutés au Chitosane.

3. Formulation selon les revendications 1 et 2, pour laquelle le nématode entomopathogène appartient aux familles Steinernematidae ou Heterorhabditidae.

4. Formulation selon les revendications 1 à 3, pour laquelle la concentration en nématode varie de 1.000 à 2.000.000/m² de superficie à traiter.

5. Formulation selon les revendications de 1 à 4, pour laquelle le chitosane a une viscosité qui oscille de 150 jusqu'à 2.000 cps.

6. Formulation selon les revendications de 1 à 5, pour laquelle l'acide faible est sélectionné parmi l'acide acétique, l'acide adipique, l'acide citrique, l'acide formique, l'acide lactique, l'acide malique, l'acide oxalique, l'acide pyruvique et l'acide tartarique.

7. Formulation selon les revendications de 1 à 6, pour laquelle le pH est ajusté au moyen d'une base sélectionnée de préférence parmi l'hydroxyde de sodium, le carbonate de sodium ou l'hydroxyde de potassium.

8. Formulation selon les revendications de 2 à 7, pour laquelle la concentration en ions Mn (II) et Mg varie dans l'intervalle 1 - 400 ppm et 1 - 200 ppm, respectivement.

9. Formulation selon les revendications de 1 à 8, qui comprend en plus des co-adjuvants agricoles commerciaux, spécifiquement sélectionnés parmi des agents fixateurs, des agents humectants et des agents hydratants ou des mélanges de ceux-ci.

10. Méthode pour augmenter la résistance d'une plante face à un fléau, qui consiste à appliquer à cette dernière la formulation des revendications de 1 à 9, au moyen d'immersion de la racine.

11. Méthode pour augmenter la résistance d'une plante face à un fléau, qui consiste à appliquer à cette dernière la formulation des revendications de 1 à 9, au moyen d'irrigation ou toute autre méthode d'application agricole conventionnelle, jusqu'à ce que la superficie des racines soit substantiellement humectée pour la transplanter, la planter ou la maintenir par irrigation durant son cycle vital.

12. Méthode pour augmenter la résistance d'une plante face à un fléau, qui consiste à appliquer à cette dernière la formulation des revendications de 1 à 9, au moyen de pulvérisation, de préférence foliaire.

13. Méthode pour augmenter la résistance d'une plante face à un fléau, qui consiste à appliquer à cette dernière la formulation des revendications de 1 à 9, au moyen d'une injection à la base de l'arbre.

14. Méthode pour augmenter la résistance du terrain face à un fléau avant la plantation, qui consiste à appliquer à ce dernier la formulation des revendications de 1 à 9.

15. Utilisation de n'importe laquelle des revendications de 1 à 9, selon n'importe laquelle des méthodes de traitement des revendications de 10 à 14, pour le traitement de plantes face à un fléau de n'importe quelle espèce sélectionnée: parmi l'ordre des Lepidoptera, de préférence les espèces:
- *Chilo spp.,*
- *Galleria mellonella,*
- *Spodoptera littoralis,*
- *Pieris rapae,*
- *Agrotis segetum,*
- *Thaumetaopoea pytiocampa,*
- *Zeuzera pyrina* ou l'ordre Coleoptera, de préférence les espèces:
- *Melolontha melolontha,*
- *Vesperus xatarti,*
- *Cosmopolites sordidus,*
- *Capnodis tenebionis,*
- *Cleonus mendicus,*
- *Hylotrepes bajulus* ou l'ordre Diptera, de préférence les espèces:
- *Ceratitis capitata,*
- *Bemisia spp,*
- *Trialeudores vaporarium,*
- *Liriomyza trifolii* ou l'ordre Acari , de préférence les espèces:
- *Boophilus pinniperda,*
- *Dermacentor vaviabilis,*
- *Amblyoma cajennense* ou l'ordre Heteroptera, de préférence l'espèce:
- *Dysdercus peruvianis* ou l'ordre Homoptera, de préférence l'espèce:
- *Dysmicoccus vaccini* ou l'ordre Isoptera, de préférence les espèces:
- *Reticulotermes spp,*
- *Kalotermes flavicollis,*
- *Glyptotermes dilatatus* ou l'ordre Gastropoda, de préférence l'espèce:
- *Deroceras reticulatum* ou l'ordre Orthoptera, de préférence les espèces:
- *Locusta migratoria*
- *Melanoplus sanguinipes*,
- *Scapteriscus vicinus* ou l'ordre Ixodida, de préférence l'espèce:
- *Ripicephalus sanguineus* ou l'ordre Blatodea, de préférence l'espèce:
- *Periplaneta brunne* ou l'ordre Hymenoptera, de préférence les espèces:
- *Tirathaba rufivena,*
- *Elasmopalpus lignosellus,*
- *Hoplocampa testudinea*.
Ou toute autre espèce parmi celles qui sont mentionnées dans la table suivante:
| Espèce | |
|---|---|
| *Acalyma vittatum* | *Chilo spp* |
| *Acrolepia* assectela | *Choristeneura occidentalis* |
| *Adoryphorus* couloni | *Cirphis compta* |
| *Agrotis ipsilon* | *Conopia myopasformis* |
| *Agrotis palustris* | *Conorhynchus mendicus* |
| *Agrotis segetum* | *Cosmopolites sordidus* |
| *Amyelois transitella* | *Costrelytra zealandica* |
| *Anabrus simplex* | *Curalio caryae* |
| *Anomala spp.* | *Cyclocephala borealis* |
| *Anoplophora malasiaca* | *Cydia pomonella* |
| *Apriona cinerea* | *Cydocephala hirta* |
| *Blastophagus pinniperda* | *Cylus formicarius* |
| *Boophilus annulatus* | *Dacus cucurbitae* |
| *Bradysia coprophila* | *Delia antiqua* |
| *Capnodis tenebrionis* | *Delia floralis* |
| *Carpocapsa pomonella* | *Delia platura* |
| *Carposina nipponensis* | *Delia radicum* |
| *Castnia dedalus* | *Dendroctonus frontalis* |
| *Cephalcia abietis* | *Dermacentor vaviabilis* |
| *Cephalcia lariciphila* | *Deroceras reticulatum* |
| *Ceratitis capitata* | *Diabrotica balteata* |
| *Ceuthorrynchus napi* | *Diabrotica barberi* |
| *Diabrotica virginifera* | *Limonius califormicus* |
| *Diaprepes abbreviatus* | *Liriomyza trifolii* |
| *Dysdercus peruvianus* | *Listronotus orejonensis* |
| *Dysmicoccus vaccini* | *Locusta migratoria* |
| *Earias insulana* | *Lycoriella auripila* |
| *Eldana spp.* | *Maladera motrica* |
| *Galeria melonella* | *Manduca sexta* |
| *Blatte Allemande* | *Megaselia halterata* |
| *Glyp totermes dilatatus* | *Melanoplus sanguinipes* |
| *Grapholita funebrana* | *Migdolus spp.* |
| *Grapholita molesta* | *Monochanus alternatus* |
| *Graphonatus peregrinus* | *Musca domestica* |
| *Helicoverpa zea* | *Nemocestes incomptus* |
| *Heliothis armigera* | *Oamona hirta* |
| *Heliothis zea* | *Operhoptera brumata* |
| *Hylenia brasicae* | *Opogona sacchari* |
| *Hylobius abietia* | *Ostrinia nubilalis* |
| *Hylotrepes bajulus* | |
| *Hylobius transversovittatus* | *Otiorhynchus ovatus* |
| *Hypantria cunea* | *Otiorhynchus sulcatus* |
| *Ixodes scapularis* | *Pachnaeus litus* |
| *Tiques ixodides* | *Panisetia marginata* |
| *Laspeyresia pomonella* | *Pantomorus spp.* |
| *Leptinotarsa decenlineata* | *Pectinophora gossyprella* |
| *Periplaneta* brunnea | *Strobilomyia appalachensis* |
| *Phlyctinus callosus* | *Thaumetopoea pytiocampa* |
| *Phyllotreta cruciferae* | *Tirathaba rufivena* |
| *Phylophaga spp.* | *Tomicus pinniperda* |
| *Pieris rapae* | *Tryporysa incertulas* |
| *Platiptilia carduidactyla* | *Vietacea polistiformis* |
| *Plutella xylostella* | *Wiseana copularis* |
| *Polyphylla spp.* | *Zeiraphera canadensis* |
| *Pseudaletia separata* | *Zeusera pyrina* |
| *Pseudexentera mali* | *Zophodis grossulatariata* |
| *Psylliodes chrysocephala* | *Phyllonictis citrella* |
| *Pyrrbalta luteola* | *Xylotrechus arvicola* |
| *Rhipicephalus sanguineus* | *Trialeudores vaporarium* |
| *Rhizotropus majalis* | *Melolontha melolontha* |
| *Rhyacionia buolinana* | *Tipula paludosa* |
| *Rhyacionia frustrana* | *Blatella germanica* |
| *Rusidrina depravata* | *Vespula spp* |
| *Scapteriscus vicinus* | *Lixus spp* |
| *Sitoma lineatus* | *Reticulitermes lucifugus* |
| *Sitona discoideus* | *Parapediasia teterrella* |
| *Sphenophorus parvulus* | *Fumibotys fumalis* |
| *Spodoptera exigua* | *Bemisia spp* |
| *Spodoptera litura* | *Longitarsus waterhorsei* |

16. Utilisation de la formulation des revendications de 1 à 9, sous forme d'une pâte qui peut s'étendre.

17. Utilisation de la formulation des revendications de 1 à 9, sous forme d'un aérosol sec, mélangé à la dissolution de nématode.

18. Utilisation de la formulation des revendications de 1 à 9, pour son application à des semences contaminées.

19. Utilisation de la formulation des revendications de 1 à 9, pour son application à des structures ou des outils agricoles, en particulier en bois, qui présentent un certain degré de cocontamination.

20. Utilisation de la formulation des revendications de 1 à 9, appliquée de manière préventive sur des terrains ou des plantes pour y éviter le développement de fléaux.
